# EUROPÄISCHE PATENTSCHRIFT

(11) **EP 0 475 487 B1**
(45) Veröffentlichungstag und Bekanntmachung des Hinweises auf die Patenterteilung: **04.05.1994**
(21) Anmeldenummer: 91202110.2
(22) Anmeldetag: 19.08.1991
(51) Int. Cl.: B01D 53/14, B01D 53/34

(54) **Verfahren zum Entschwefeln eines Gasgemisches, das H2S, COS und CO2 enthält, sowie eine Waschlösung hierfür**
Process for the desulphuration of a gas mixture containing H2S, COS and CO2, and an absorbant solution for that purpose
Procédé de désulphuration d'un mélange gazeux contenant H2S, COS et CO2, et un absorbant pour son exécution

(30) Priorität: 12.09.1990 DE 4028880
(43) Veröffentlichungstag der Anmeldung: 18.03.1992
(73) Patentinhaber: METALLGESELLSCHAFT Aktiengesellschaft, 60015 Frankfurt (DE)
(72) Erfinder: Schlauer, Johann, Dr., W-6000 Frankfurt 70 (DE); Kriebel, Manfred, Dr., W-6000 Frankfurt 70 (DE); Fritzsche, Hans-Joachim, W-6161 Reichelsheim (DE); Grünewald, Gerhard, W-6500 Mainz-Gonsenheim (DE); Dreer, Dieter, W-6457 Maintal 2 (DE)

(56) Entgegenhaltungen:
- DE-A- 2 250 169
- GB-A- 1 024 412
- US-A- 3 777 010
- US-A- 4 484 934

## Beschreibung

Die Erfindung betrifft ein Verfahren zum Entschwefeln eines Gasgemisches, das H₂S, COS und CO₂ enthält, durch Waschen in einer Waschzone mit einer Waschlösung, die hauptsächlich aus mindestens einem N-alkylsubstituierten Lactam besteht und einen Wassergehalt von 1 bis 10 Gew.-% aufweist, wobei man beladene Waschlösung regeneriert und in die Waschzone zurückleitet und man mindestens 50% des der Waschzone zugeführten COS in der Waschzone durch Hydrolyse umsetzt.

Verfahren dieser Art sind bekannt und z.B. in der DE-A-30 00 250 und im dazu korrespondierenden US-Patent US-A-4 368 059 beschrieben. Hierbei benützt man eine Waschlösung, die zusätzlich zu einem organischen Lösungsmittel pro Liter 0,5 bis 5 mol eines oder mehrerer sekundärer oder tertiärer Amine enthält. Diese Amine sieden bei 1 bar zwischen 40 und 110°C. Als Hauptkomponente enthält die bekannte Waschlösung bevorzugt Methanol. Beim bekannten Verfahren dienen die Amine dazu, die Löslichkeit von COS zu verbessern, da sie üblicherweise erheblich schlechter ist als die Löslichkeit von H₂S.

Bei Verfahren zur selektiven Entschwefelung von Gasgemischen, die H₂S, COS und CO₂ enthalten, mit den bekannten, physikalisch wirkenden Lösungsmitteln wird die Menge an eingesetztem umlaufendem Lösungsmittel im allgemeinen durch den Gehalt an COS bestimmt, weil es unter den schwefelhaltigen Gaskomponenten die am wenigsten lösliche ist. Wenn es aber gelingt, COS durch Hydrolyse mit H₂O zu H₂S und CO₂ gemäß der Reaktion

COS + H₂O = H₂S + CO₂

in der Waschzone umzusetzen, kann dadurch mit verringertem Lösungsmittelumlauf gearbeitet werden. Der Erfindung liegt die Aufgabe zugrunde, COS mindestens teilweise in der Waschzone durch Hydrolyse zu beseitigen und dadurch die Wirtschaftlichkeit und die Selektivität des Verfahrens zu verbessern.

Beim eingangs genannten Verfahren wird die Aufgabe erfindungsgemäß dadurch gelöst, daß man die Temperatur in der Waschzone im Bereich von 0 bis 50°C hält und daß man in die Waschzone Ammoniak und/oder Methylamin als Katalysator in einer Menge von etwa 5 bis 100 Mol und zumeist höchstens 50 Mol pro m³ Waschlösung einleitet.

Aus EP-A-0 008 449 und DE-A-2 250 169 ist es bekannt, daß die Geschwindigkeit der Hydrolyse mit sinkender Temperatur abnimmt und die Reaktion etwa bei Temperaturen unter 50°C einfriert. Bei höheren Temperaturen wird die Reaktion von COS mit H₂O zu H₂S + CO₂ zwar beschleunigt, jedoch steigt gleichzeitig der Restgehalt an COS im Gleichgewicht.

Überraschend wurde gefunden, daß die genannten Katalysatorsubstanzen die COS-Hydrolyse bevorzugt in Gegenwart relativ hoher Konzentrationen an CO₂ beschleunigen. Da CO₂ ein Reaktionsprodukt der COS-Hydrolyse ist, hätte man erwartet, daß die Hydrolyse mit steigendem CO₂-Partialdruck nicht beschleunigt, sondern gebremst würde. Das Verfahren empfiehlt sich besonders bei einem CO₂-Partialdruck in der Waschzone von mindestens 0,1 bar und vorzugsweise 1 bis 20 bar. Unter diesen Bedingungen arbeitet die erfindungsgemäße Gaswäsche auch sehr selektiv, weil die Hydrolysegeschwindigkeit sehr hoch ist und die Löslichkeit von H₂S in der Waschlösung erheblich besser ist als die von CO₂. Dies ist erstrebenswert, weil man dadurch die Gaswäsche entlastet und weil das CO₂ als erwünschte Komponente im Reingas belassen wird. Die Katalysatorsubstanz kann man zusammen mit der Waschlösung in die Waschzone leiten. Zumeist ist es aber vorteilhaft, die Katalysatorsubstanz unterhalb der Aufgabestelle der Waschlösung getrennt von dieser in die Waschzone zu geben.

Die Katalysatorsubstanzen weisen einen relativ niedrigen Siedepunkt auf, denn Ammoniak (NH₃) hat einen Siedepunkt von -33,6°C und Methylamin (CH₃NH₂) hat einen Siedepunkt von -6,3°C.

Zur Erfindung gehört ferner die Waschlösung zum Entschwefeln von H₂S, COS und CO₂ enthaltenden Gasgemischen mit mindestens einem N-alkylierten Lactam als Hauptkomponente und einem Wassergehalt von 1 bis 10 Gew.-%, wobei die Waschlösung pro m³ 5 bis 100 Mol und zumeist höchstens 50 Mol Ammoniak und/oder Methylamin enthält. Es ist aber auch möglich, die Katalysatorsubstanz oder das als Katalysator dienende Substanzgemisch getrennt von der Waschlösung in die Waschzone zu leiten.

Das zu entschwefelnde Gasgemisch enthält üblicherweise beträchtliche Mengen an CO₂, so daß der CO₂-Gehalt mindestens das 0,5-fache des H₂S-Gehalts beträgt. Die Waschtemperaturen liegen vorzugsweise im Bereich von 0 bis 50°C und zumeist bei 20 bis 40°C. Durch die Senkung der Temperatur unter 50°C wird die Löslichkeit der schwefelhaltigen Gaskomponenten erhöht und die Wirtschaftlichkeit des Verfahrens somit verbessert.

Beim Regenerieren treibt man aus der beladenen Waschlösung ein H₂S und Katalysator enthaltendes Gas- und Dampfgemisch aus, trennt den Katalysator ab und leitet ihn in die Waschzone zurück. Die Regeneration erfolgt in bekannter Weise durch Entspannen, Strippen und/oder Aufkochen. Das Ammoniak und/oder das Methylamin wird bei der Regeneration zu mindestens 50 % aus der Waschlösung abgetrieben, vorzugsweise treibt man mindestens 90 % der Katalysatorsubstanz ab. Durch den Abtrieb dieser Substanz wird in der Regeneration verhindert, daß die Löslichkeit der sauren Gase wesentlich steigt, was die Regeneration erschweren würde.

Als Hauptkomponente für die Waschlösung eignen sich vor allem N-alkylierte Pyrrolidone oder Piperidone, z.B. N-Methylpyrrolidon (NMP), die an sich bekannt sind.

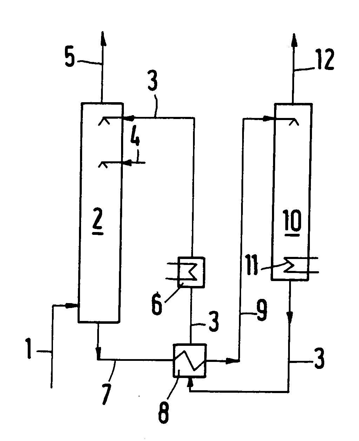

Ausgestaltungsmöglichkeiten des Verfahrens werden mit Hilfe der Zeichnung erläutert, die ein Fließschema des Verfahrens zeigt.

Das zu entschwefelnde Gasgemisch, das H₂S, COS und CO₂ enthält, wird in der Leitung (1) herangeführt. Bei diesem Gas kann es sich z.B. um ein Gasgemisch handeln, das vor allem aus H₂ und CO besteht. In der Waschzone (2) wird das Gasgemisch mit regenerierter Waschlösung aus der Leitung (3) in direkten Kontakt gebracht. Die Waschlösung besteht z.B. aus NMP mit 3 bis 6 Gew.-% Wasser. Ferner gibt man der Waschzone durch die Leitung (4) als Katalysator für die COS-Hydrolyse Ammoniak und/oder Methylamin auf. Die Waschzone (2) enthält an sich bekannte Stoffaustauschelemente, z.B. flüssigkeitsdurchlässige Böden, die aber in der Zeichnung weggelassen wurden. Gereinigtes Gas zieht in der Leitung (5) ab, es ist praktisch vollständig entschwefelt, enthält aber wegen der selektiven Wirksamkeit der Waschlösung den Hauptteil des ursprünglichen CO₂-Gehalts.

Die beladene Waschlösung, die H₂S, CO₂ und in geringer Menge auch COS enthält, verläßt die Waschzone (2) in der Leitung (7), wird im Wärmeaustauscher (8) erwärmt und gelangt durch die Leitung (9) zur Regenerationskolonne (10). Hier wird durch einen Aufkocher (11) ein Dampfgemisch erzeugt, der die gelösten Gase aus der Waschlösung austreibt. Hierbei ist es vorteilhaft, daß die Katalysatorsubstanzen relativ niedrige Siedepunkte aufweisen, so daß sie in der Kolonne (10) bei den dort herrschenden Temperaturen im Bereich von 120 bis 180°C fast vollständig abgetrieben werden. Regenerierte Waschlösung fließt durch die Leitung (3) und wird im Wärmeaustauscher (8) und in einem indirekten Kühler (6) abgekühlt, bevor sie wieder in die Waschzone (2) eintritt.

Das am Kopf der Kolonne (10) durch die Leitung (12) abgeführte Gas- und Dampfgemisch enthält Waschlösung, Katalysatorsubstanz, H₂S, COS und CO₂. Wenn man den Katalysator aus dem Gemisch zurückgewinnen will, trennt man ihn in nicht dargestellter Weise ab und führt ihn in der Leitung (4) zurück.

### Beispiel

Pro Stunde werden 10 Nm³ eines Gasgemisches in einer gegenüber der Zeichnung vereinfachten Verfahrensführung behandelt. Das Gasgemisch besteht aus
- H₂: 34 Vol.-%
- CO₂: 31,5 Vol.-%
- H₂S: 1,2 Vol.-%
- COS: 100 ppm
- CO: Rest,

es wird bei 30°C und 5,5 MPa in einer Waschkolonne (2) mit 60 Böden mit einer Waschlösung behandelt, die aus N-Methylpyrrolidon mit 6 Gew.-% Wasser besteht. Pro Stunde werden 13,7 l Waschlösung auf den obersten, den 60sten Boden der Kolonne (2) aufgegeben und gleichzeitig gibt man auf den 55sten Boden eine Katalysatorlösung auf, die beim ersten Versuch eine wäßrige Ammoniaklösung ist. Es werden 0,14 l/h dieser Lösung, die pro Liter 17 g NH₃ (= 1 mol) enthält, eingesetzt. Im Bereich zwischen dem ersten und 55sten Boden wird dadurch in der Waschlösung eine NH₃-Konzentration von 10 mol/m³ und ein Wassergehalt von 7 Gew.-% eingestellt. Die beladene Waschlösung wird durch Strippen und Kochen regeneriert, dabei nimmt der NH₃-Gehalt in der Waschlösung auf unter 0,1 mol/m³ ab und der Wassergehalt sinkt auf 6 Gew.-%. Die regenerierte Waschlösung wird zurück zur Waschkolonne gepumpt und das anfallende NH₃-haltige Kondensat wird entfernt. Das entschwefelte Gasgemisch, das die Waschkolonne in der Leitung (5) verläßt, enthält noch 28,5 Vol.-% CO₂, 0,1 ppm H₂S und 2 ppm COS.

Im zweiten Versuch (Vergleichsversuch) wird die NH₃-Katalysatorlösung durch reines Wasser ersetzt, das man ebenfalls auf den 55sten Boden aufgibt. Unter sonst identischen Bedingungen wie beim ersten Versuch weist das Gasgemisch in der Leitung (5) nunmehr 0,5 ppm H₂S, 22 ppm COS und 28,5 Vol.-% CO₂ auf, der COS-Gehalt ist also erheblich höher als beim ersten Versuch.

Im dritten Versuch leitet man pro Stunde auf den 55sten Boden der Waschkolonne (2) 0,14 l einer wäßrigen Lösung, die pro Liter 17 g NH₃ und 62 g Methylamin enthält. Damit erreicht man im Bereich zwischen dem ersten und 55sten Boden in der Waschlösung eine NH₃-Konzentration von 10 mol/m³ und eine Methylaminkonzentration von 20 mol/m³. Unter sonst gleichen Bedingungen wie im ersten Versuch verläßt die Waschkolonne in der Leitung (5) ein Gasgemisch, das 0,1 ppm H₂S, 1,0 ppm COS und 28,5 Vol.-% CO₂ enthält.

Ein vierter Versuch wird nur mit Methylamin in der Katalysatorlösung durchgeführt. Auf den 55sten Boden der Waschkolonne (2) gibt man 0,14 l/h dieser Lösung auf, die pro Liter 62 g Methylamin enthält. Damit stellt man im Bereich zwischen dem ersten und 55sten Boden in der Waschlösung eine Methylaminkonzentration von 20 mol/m³ ein. Unter sonst gleichen Bedingungen wie im ersten Versuch enthält das Gasgemisch in der Leitung (5) nunmehr 28,5 Vol.-% CO₂, 0,1 ppm H₂S und 7 ppm COS, also wesentlich weniger H₂S und COS als im zweiten Versuch (Vergleichsversuch). H₂ und CO werden in allen Versuchen durch die Waschlösung nur unwesentlich aus dem Gasgemisch entfernt.

## Patentansprüche

1. Verfahren zum Entschwefeln eines Gasgemisches, das H₂S, COS und CO₂ enthält, durch Waschen in einer Waschzone mit einer Waschlösung, die hauptsächlich aus mindestens einem N-alkylsubstituierten Lactam besteht und einen Wassergehalt von 1 bis 10 Gew.-% aufweist, wobei man beladene Waschlösung regeneriert und in die Waschzone zurückleitet und man mindestens 50 % des der Waschzone zugeführten COS in der Waschzone durch Hydrolyse umsetzt, dadurch gekennzeichnet, daß man die Temperatur in der Waschzone im Bereich von 0 bis 50°C hält und daß man in die Waschzone Ammoniak und/oder Methylamin als Katalysator in einer Menge von etwa 5 bis 100 Mol pro m³ Waschlösung einleitet.

2. Verfahren nach Anspruch 1, dadurch gekennzeichnet, daß man in die Waschzone ein zu entschwefelndes Gasgemisch leitet, dessen CO₂-Gehalt mindestens das 0,5-fache des H₂S-Gehalts beträgt.

3. Verfahren nach Anspruch 1 oder 2, dadurch gekennzeichnet, daß man beim Regenerieren aus der beladenen Waschlösung ein H₂S und Katalysator enthaltendes Gas- und Dampfgemisch austreibt, aus dem Gemisch den Katalysator abtrennt und in die Waschzone zurückleitet.

4. Verfahren nach Anspruch 1 oder einem der folgenden, dadurch gekennzeichnet, daß die Waschlösung hauptsächlich aus mindestens einem N-alkylierten Pyrrolidon oder Piperidon besteht.

5. Verfahren nach Anspruch 4, dadurch gekennzeichnet, daß die Waschlösung hauptsächlich aus N-Methylpyrrolidon besteht.

6. Waschlösung zum Entschwefeln von H₂S, COS und CO₂ enthaltenden Gasgemischen mit mindestens einem N-alkylierten Lactam als Hauptkomponente und einem Wassergehalt von 1 bis 10 Gew.-%, dadurch gekennzeichnet, daß die Waschlösung pro m³ 5 bis 100 Mol Ammoniak und/oder Methylamin enthält.

## Claims

1. A method for desulphurising a gas mixture which contains H₂S, COS and CO₂, by scrubbing in a scrubbing zone with a scrubbing solution which consists mainly of at least one N-alkyl-substituted lactam and has a water content of 1 to 10% by weight, with laden scrubbing solution being regenerated and recycled into the scrubbing zone, and at least 50% of the COS fed to the scrubbing zone being reacted in the scrubbing zone by hydrolysis, characterised in that the temperature in the scrubbing zone is kept within the range of 0 to 50°C and that ammonia and/or methylamine is introduced into the scrubbing zone as a catalyst in a quantity of about 5 to 100 mole per m³ scrubbing solution.

2. A method according to Claim 1, characterised in that a gas mixture which is to be desulphurised, the CO₂ content of which is at least 0.5 times the H₂S content, is passed into the scrubbing zone.

3. A method according to Claim 1 or 2, characterised in that during regeneration a gas and steam mixture containing H₂S and catalyst is driven out of the laden scrubbing solution, and the catalyst is separated out of the mixture and is returned to the scrubbing zone.

4. A method according to Claim 1 or one of the following Claims, characterised in that the scrubbing solution consists mainly of at least one N-alkylated pyrrolidone or piperidone.

5. A method according to Claim 4, characterised in that the scrubbing solution consists mainly of N-methylpyrrolidone.

6. A scrubbing solution for desulphurising gas mixtures containing H₂S, COS and CO₂, having at least one N-alkylated lactam as main constituent and a water content of 1 to 10% by weight, characterised in that the scrubbing solution contains 5 to 100 mole ammonia and/or methylamine per m³.

## Revendications

1. Procédé de désulfuration d'un mélange gazeux contenant H₂S, COS et CO₂, par lavage dans une zone de lavage par une solution de lavage qui est constituée principalement d'au moins un lactame à substitution alcoyle sur l'azote et qui a une teneur en eau de 1 à 10% en poids, qui consiste à régénérer la solution de lavage chargée et à la retourner à la zone de lavage et à transformer par hydrolyse dans la zone de lavage au moins 50% du COS envoyé à la zone de lavage, caractérisé en ce qu'il consiste à maintenir la température dans la zone de lavage entre 0° et 50°C et à envoyer dans la zone de lavage de l'ammoniac et/ou de la méthylamine comme catalyseur, en une quantité de 5 à 100 moles environ par m³ de solution de lavage.

2. Procédé suivant la revendication 1 caractérisé en ce qu'il consiste à envoyer à la zone de lavage un mélange gazeux à désulfurer, dont la teneur en CO₂ représente au moins 0,5 fois celle en H₂S.

3. Procédé suivant la revendication 1 ou 2 caractérisé en ce qu'il consiste à extraire, lors de la régénération de la solution de lavage chargée, un mélange de gaz et de vapeur contenant H₂S et le catalyseur, à séparer le catalyseur du mélange et à le retourner à la zone de lavage.

4. Procédé suivant la revendication 1 ou l'une des suivantes caractérisé en ce que la solution de lavage est constituée principalement d'au moins une pyrrolidone à substitution alcoyle sur l'azote ou d'une pipéridone.

5. Procédé suivant la revendication 4 caractérisé en ce que la solution de lavage est principalement constituée de N-méthylpyrrolidone.

6. Solution de lavage, destinée à la désulfuration de mélanges gazeux contenant H₂S, COS et CO₂, comprenant au moins un lactame alcoylé sur l'azote comme constituant principal et ayant une teneur en eau de 1 à 10% en poids, caractérisée en ce que la solution de lavage contient par m³ de 5 à 100 mole d'ammoniac et/ou de méthylamine.
